# EUROPÄISCHE PATENTSCHRIFT

(11) **EP 0 334 019 B1**
(45) Veröffentlichungstag und Bekanntmachung des Hinweises auf die Patenterteilung: **30.03.1994**
(21) Anmeldenummer: 89102744.3
(22) Anmeldetag: 17.02.1989
(51) Int. Cl.: B65G 53/66, B65G 53/22

(54) **Druckluftentleereinrichtung für einen Schüttgutbehälter mit mindestens zwei Entleeröffnungen sowie ein Verfahren zur Entleerung des Schüttgutbehälters**
Discharging device with air pressure for a bulk container with at least two discharging openings as well as a method for discharging the bulk container
Dispositif de déchargement à air sous pression pour un conteneur pour matières en vrac comportant au moins deux ouvertures de déchargement ainsi qu'un procédé de déchargement de ce conteneur pour matières en vrac

(30) Priorität: 25.03.1988 DE 3810191
(43) Veröffentlichungstag der Anmeldung: 27.09.1989
(73) Patentinhaber: Linke-Hofmann-Busch Waggon-Fahrzeug- Maschinen GmbH, D-38239 Salzgitter (DE); VTG VEREINIGTE TANKLAGER UND TRANSPORTMITTEL GMBH, D-20354 Hamburg (DE)
(72) Erfinder: Seidenstücker, Bernhard, Dipl.-Ing., D-38300 Wolfenbüttel (DE); Heuschmann, Jürgen, D-21029 Hamburg (DE); Schimoch, Hans-Peter, D-38302 Wolfenbüttel (DE); Umbach, Gerhard, Dipl.-Ing., D-22043 Hamburg (DE); Höhne, Wolfram, Dipl.-Ing., D-22419 Hamburg (DE)

(56) Entgegenhaltungen:
- EP-A- 0 014 769
- EP-A- 0 027 909
- EP-A- 0 190 592
- AT-B- 354 344
- DE-A- 2 437 799
- DE-A- 3 219 813
- FR-A- 2 523 097

## Beschreibung

Die Erfindung betrifft eine Druckluftentleereinrichtung für Schüttgutbehälter nach dem Oberbegriff des Anspruchs 4 sowie ein Verfahren zur Entleerung des Schüttgutbehälters nach dem Oberbegriff des Anspruchs 1.

Schüttgutbehälter sind als stationäre Silos oder mobile Behälterwagen gebräuchlich und weisen neben Befüllmittel eine Entleereinrichtung auf. Feinkörniges Ladegut - auch Schüttgut genannt - wird in der Regel mittels Druckluft entleert, wobei die Druckluft das Ladegut fluidisiert und es in fließfähigem Zustand aus dem Behälter herausdrückt.

Die mobilen Behälterwagen weisen entweder stehend angeordnete im wesentlichen zylindrische Behälter oder liegend angeordnete zylindrische Behälter auf.

Bei stehend angeordneten Behältern beispielsweise nach der DE-OS 26 16 430 weisen diese an ihrem unteren Teil einen konischen Ansatz auf, der einen möglichst restlosen Austrag des Ladegutes sicherstellt.

Aus der DE-OS 30 12 065 ist eine Vorrichtung zum pneumatischen Entleeren eines mobilen, liegend angeordneten Schüttgutbehälter bekannt, wobei der Schüttgutbehälter in Längsrichtung an der Unterseite mehrere konisch zulaufende Entleertrichter aufweist.

Am Ende der Auslauftrichter sind Produktabsperrorgane in Form von Schiebern oder Ventilen angeordnet, die den Produktfluß in ein gemeinsames Produktförderrohr freigeben. In den Auslauftrichtern sind Einrichtungen zur Auflockerung des Ladegutes mittels Druckluft angeordnet. Diese Druckluft wird über Auflockerungsböden in den Produktraum eingeführt, fluidisiert das Ladegut und bildet einen Überdruck, der das Ladegut in fließfähigem Zustand aus dem Behälter in die Produktförderleitung befördert. Eine Steuereinrichtung soll nach einem voreingestellten Programm die einem Entleertrichter zugeordneten Absperrventilgruppen kurzzeitig öffen und schließen, wobei die Absperrventile in drei in unterschiedlicher Höhe des Entleertrichters angeordnete Gruppen zusammengefaßt sind. Durch das wechselseitig impulsartige Beaufschlagen des Schüttgutes im Entleertrichter an unterschiedlicher Stelle, wird die Gefahr einer Kaminbildung im Entleertrichter weitgehend beseitigt.

Aus der DE-PS 18 16 485 ist es bekannt, neben der Druckluftzufuhr über die Auflockerungsböden zur Beschleunigung des Produktflusses in die Produktleitung Zusatzluft mittels Injektordüsen einzuleiten. Die Produktschieber und die Ventile für die Druckluftzuleitung werden entweder dezentral manuell bedient oder die Betätigung aller zur Entleerung erforderlichen Ventile und Schieber der Kammern des Behälters sind zentral von jeder Wagenseite betätigbar, wobei zur Steuerung der Schieber und Ventile die am Wagen vorhandene Energie der komprimierten Luft benutzt wird.

Die Steuerung der Schieber und Ventile kann zwar ebenso wie bei der DE-OS 30 12 065 zentral von einem Steuerpunkt aus erfolgen, eine Rückmeldung über den Produktaustrag aus den einzelnen Entleertrichtern wird allerdings nicht angezeigt und zur weiteren Steuerung im Hinblick auf einen optimalen Produktaustrag genutzt. Die Erfahrung zeigt, daß wegen unterschiedlicher Abflußbedingungen und unterschiedlicher Geometrie der Trichter eine Kaminbildung nicht immer vermeidbar ist und einige Ausläufe zusammenhängender Kammern bereits ohne Ladegut sind, während an anderen Ausläufen noch Ladegut ansteht. Dadurch kann die Druckluft ohne Produktaustrag aus dem Auslauf durch die Produktleitung ausströmen. Es kommt zu einem starken Druckabfall und durch das Zusammenbrechen der pneumatischen Förderung zum vorzeitigen Stillstand des Produktaustrages.

Der optimale Produktaustrag ist aber nur gegeben, wenn die Steuerung eine Rückmeldung über den Produktaustrag als Einflußgröße für die Steuerung schnell und sicher umsetzt.

Der Erfindung liegt die Aufgabe zugrunde, eine gattungsgemäße Druckluftentleereinrichtung derart weiterzubilden und ein Verfahren zur Entleerung eines Schüttgutbehälters anzugeben, daß der Produktaustrag zeitlich optimiert und ein Stillstand der pneumatischen Förderung vor Entleerung des gesamten Schüttgutbehälters und ein Verlust des Schüttgutes vermieden wird.

Diese Aufgabe wird hinsichtlich der Weiterbildung einer gattungsgemäßen Drucklufteinrichtung durch die im kennzeichnenden Teil des Anspruchs 4 genannten Merkmale gelöst und hinsichtlich des Verfahrens zur Entleerung eines mit der erfindungsgemäßen Druckluftentleereinrichtung weitergebildeten Schüttgutbehälters durch das im Anspruch 1 gekennzeichnete Verfahren gelöst.

In den Unteransprüchen sind zweckmäßige Weiterbildungen der Erfindung angegeben.

Ein Ausführungsbeispiel der Erfindung ist in der Zeichnung schematisch dargestellt und wird im folgenden näher erläutert. Es zeigt:

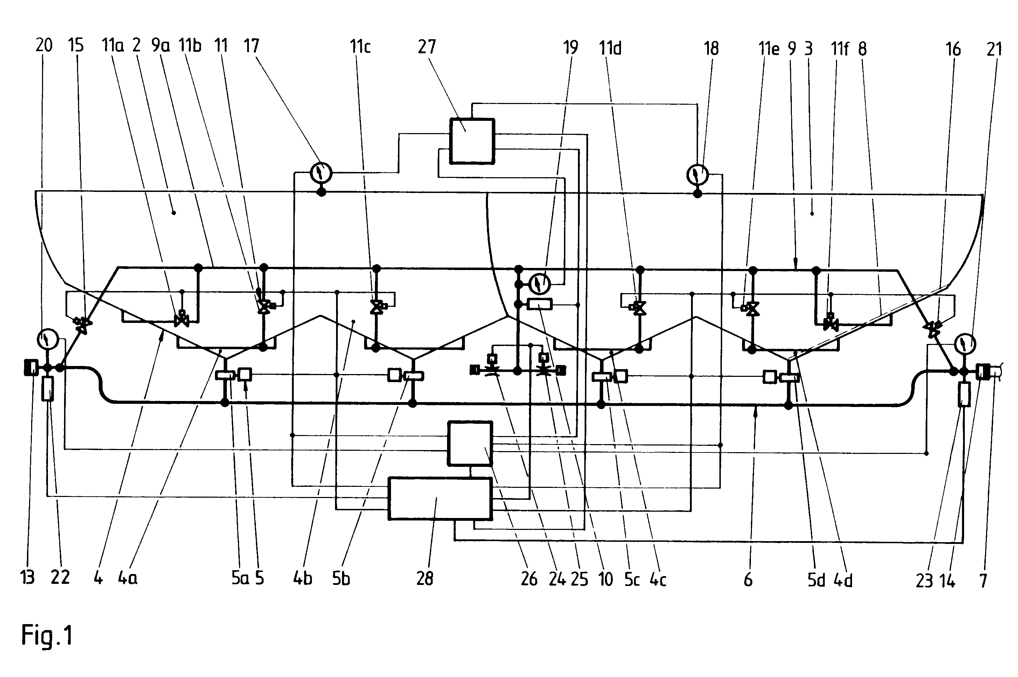

- Fig. 1: eine schematische Darstellung der Druckluftentleereinrichtung in Seitenansicht.

Ein liegend angeordneter Schüttgutbehälter 1 ist in mehrere Kammern 2 und 3 unterteilt, welche jeweils mindestens zwei an der Unterseite angeordnete Entleertrichter 4 (4a und 4b bzw. 4c und 4d) mit jeweils einer Entleeröffnung aufweisen, die über jeweils ein zugeordnetes Absperrorgan 5 (5a bzw. 5b bzw. 5c bzw. 5d) in eine gemeinsame Produktförderleitung 6 münden. Die Produktförderleitung 6 verbindet die Entleeröffnungen der Kammern 2 und 3 mit einem Produktförderschlauch 7 zum externen Bestimmungsort. Der Produktförderschlauch 7 ist zu beiden Enden des Schüttgutbehälters an die Produktförderleitung 6 anschließbar. An der Behältersohle sind Auflockerungsböden 8 zum Auflockern des Ladegutes vorgesehen, die über ein Druckluftleitungssystem 9 mit einer Druckluftquelle 10 verbunden sind. Die Druckluftzuleitungen zu den einzelnen Entleertrichtern 4 (4a bis 4d) sind jeweils durch ein Druckluftventil 11 (11a bzw. 11b bzw. 11c bzw. 11d bzw. 11e bzw. 11f) gegen die Druckluftsammelleitung 9a absperrbar. Die Produktförderleitungen 6 ist an ihren Enden durch je einen Anschluß 14 bzw. 13 für den Produktförderschlauch 7 abgeschlossen. Die Druckluftsammelleitung 9a ist mit der Produktförderleitung 6 im Bereich der Anschlüsse 13 bzw. 14 unter Zwischenschaltung je einer Injektordüse 16 bzw. 15 verbunden. Zum Messen des jeweiligen Druckes in jeder Kammer 2 und 3 ist der Kammer 2 eine Druckmeßeinrichtung 17 und der Kammer 3 eine Druckmeßeinrichtung 18 zugeordnet. Der Druckluftsammelleitung 9a ist eine Druckmeßeinrichtung 19 zugeordnet und jeder Anschlußseite der Produktförderleitung 6 für den Produktförderschlauch 7 ist jeweils eine Druckmeßeinrichtung 20 bzw. 21 zugeordnet. Desweiteren ist dem Anschluß 13 eine Anschlußüberwachungseinheit 22 und dem Anschluß 14 eine Anschlußüberwachungseinheit 23 zugeordnet.

Die Druckluftsammelleitung 9a ist an jedem Ende über eine Drossel 24 bzw. 25 abgeschlossen und mit der Druckluftquelle 10 verbindbar.

Die Druckmeßeinrichtung 17 für die Kammer 2 und die Druckmeßeinrichtungen 20 und 21 in der Produktförderleitung 6 sind mittels Signalleitungen mit einer Differenzdruck-Meßeinrichtung 26 verbunden. Die Druckmeßeinrichtung 18 für die Kammer 3 ist gleichfalls mittels Signalleitungen mit der Differenzdruck-Meßeinrichtung 26 verbunden. Die Druckmeßeinrichtung 17 ist über eine weitere Signalleitung mit einer Differenzdruck-Meßeinrichtung 27 verbunden, in die eine Signalleitung von der Druckmeßeinrichtung 19 einleitet. Ebenso ist die Druckmeßeinrichtung 18 der Kammer 3 über eine Signalleitung mit der Differenzdruck-Meßeinrichtung 27 verbunden.

Die Druckmeßeinrichtungen 17 und 18 sind jeweils über eine Signalleitung mit einer Zentraleinheit 28 zur Regelung und Steuerung der Absperrorgane 5 (5a - 5d) der Injektordüsen 15 und 16 sowie der Druckluftventile 11 (11a bis 11f) verbunden.

Die Anschlußüberwachungseinheiten 22 und 23 sind jeweils über eine Signalleitung mit der Zentraleinheit 28 verbunden.

Desweiteren vermögen die Differenzdruck-Meßeinrichtungen 26 und 27 Signale an die Zentraleinheit 28 abzugeben.

Die Zentraleinheit 28 steuert die Stellungen der Absperrorgane 5 (5a - 5d) der Injektordüsen 15 und 16 sowie die Druckluftventile 11 (11a - 11f).

Die Funktion der vorbeschriebenen Einrichtung, bei der das Öffnen und Schließen der Absperrorgane 5 (5a - 5d) zum Entleeren der Kammern 2 und 3 des Schüttgutbehälters 1 durch die Zentraleinheit 28 nach Erfassung und Auswertung von fördertechnisch relevanten Druck Einführungsgrößen bewirkt wird, ist nachfolgend beschrieben.

Um die Kammer 2 zu entleeren, veranlaßt die Zentraleinheit 28 zunächst das Öffnen der Druckluftventile 11a und 11b. Die Druckluft strömt von der Druckluftquelle 10 über das Druckluftleitungssystem 9 unter Fluidisierung des Schüttgutes in die Kammer 2 des Schüttgutbehälters 1. Nach Erreichen eines vorbestimmten Druckes in der Kammer 2, der durch die Druckmeßeinrichtung 17 erfaßt wird, gibt diese ein Signal an die Zentraleinheit 28, die ein Öffnen des Absperrorganes 5a des Entleertrichters 4a veranlaßt, woraufhin das Schüttgut über die Profuktförderleitung 6 und wie vorliegend über den am Anschluß 14 angebrachten Produktförderschlauch 7 abgefördert wird.

Ist der Entleertrichter 4a über dem Absperrorgan 5a frei von Schüttgut, sinkt der Strömungswiderstand in der Produktförderleitung 6 und es kommt zu einem Druckabfall an der Druckmeßeinrichtung 17. Die Druckmeßeinrichtung 17 gibt daraufhin ein Signal an die Zentraleinheit 28, die das Absperrorgan 5a zum Verschließung des Entleertrichters 4a veranlaßt. Da die Druckluftzufuhr in die Kammer 2 weiterhin erfolgt, steigt der Druck in der Kammer 2. Bei Erreichen des vorbestimmten Druckes veranlaßt die Druckmeßeinrichtung 17 wiederum ein Signal an die Zentraleinheit 28, die die Öffnung des Absperrorganes 5b des Trichters 4a der Kammer 2 veranlaßt. Das in der Kammer 2 befindliche Schüttgut wird über die Produktförderleitung 6 abgefördert, bis auch der Entleertrichter 4b über dem Absperrorgan 5b geleert ist, bzw. keine Förderung mehr stattfindet. Es kommt abermals zu einem Druckabfall in der Kammer 2, woraufhin die Druckmeßeinrichtung 17 bei Druckabfall unter den vorgegebenen Solldruck ein Signal an die Zentraleinheit 28 abgibt, woraufhin diese nunmehr das Schließen des Absperrorganes 5b veranlaßt. Um verbleibende Reste des Schüttgutes in der Kammer 2 in die Produktförderleitung 6 zu blasen, kann über die Zentraleinheit 28 ein erneutes Öffnen und Schließen der Absperrorgane 5a und 5b in einer vorgebbaren Reihenfolge veranlaßt werden.

Nach Abschluß des Entleervorganges, signalisiert durch einen von der Druckmeßeinrichtung 17 angezeigten nochmaligen Druckabfall, veranlaßt ein Signal der Druckmeßeinrichtung 17 die Zentraleinheit 28 sämtliche Druckluftventile 11a, 11b und 11c zur Kammer 2 zu schließen. Die Zentraleinheit 28 greift danach die Signale der Druckmeßeinrichtung 18 der nächstfolgenden Kammer 3 des Schüttgutbehälters. Die Kammer 3 wird nach dem gleichen Verfahren entleert wie die Kammer 2. Das vorgeschriebene Verfahren zur Entleerung von Schüttgutbehältern ist auch für Schüttgutbehälter mit beliebig vielen Kammern anwendbar.

Zur Überwachung der ordnungsgemäßen mechanischen Installation des Produktförderschlauches 7 an den Enden der Produktförderleitung 6 an den Anschlüssen 13 oder 14, ist an diesen jeweils eine Anschlußüberwachungseinheit 22 bzw. 23 angeordnet. Bei fehlerhaftem Anschluß veranlaßt beispielsweise die Anschlußüberwachungseinheit 23 ein Signal an die Zentraleinheit 28, welche daraufhin veranlaßt, daß sämtliche Stellglieder (Absperrorgane 5, Druckluftventile 11 und die Injektordüsen 15 und 16) die Schließstellung einnehmen.

Die Anschlußüberwachungseinheiten 22 bzw. 23 können zweckmäßiger Weise drei Anschlußbedingungen unterscheiden:
- Produktförderschlauch 7 ordnungsgemäß angeschlossen
- Anschluß 13 bzw. 14 verschlossen
- Anschluß 13 bzw. 14 weder verschlossen noch Produktförderschlauch 7 angeschlossen.

Mit dem Signal "Produktförderschlauch 7 ordnungsgemäß an Anschluß 14 angeschlossen" und der Abfrage eines die Förderung zulassenden Anschlußzustandes des Anschlusses 13 veranlaßt die Überwachungseinheit 23 die Zentraleinheit 28, die Signale zum Einblasen von Druckluft in die Produktförderleitung 6 in Förderrichtung über die Injektordüse 16 und zum Öffnen der Druckluftventile 11 für die erste zu entleerende Kammer des Schüttgutbehälters 1 zu geben.

Falls der Produktförderschlauch 7 nicht ordnungsgemäß am Anschluß 14 befestigt wurde, abreißt oder platzt, kommt es zu einem Druckabfall an der Druckmeßeinrichtung 21 am Anschluß 14. Durch eine ständige Differenzdruckmessung der Differenzdruck-Meßeinrichtung 26 zwischen der Druckmeßeinrichtung der jeweils beaufschlagten Kammer (Druckmeßeinrichtung 17 für die Kammer 2 bzw. Druckmeßeinrichtung 18 für die Kammer 3) und der Druckmeßeinrichtung 21 wird überwacht, ob der Produktförderschlauch 7 noch ordnungsgemäß angeschlossen ist. Wegen der Strömungswiderstände in der Produktförderleitung 6 vom jeweiligen Absperrorgang 4 zur Meßstelle der Druckmeßeinrichtung 21 stellt sich ein Differenzdruck einer bestimmten Größe ein. Überschreitet dieser Differenzdruck einen vorgeschriebenen Wert, wird ein Signal an die Zentraleinheit 28 abgegeben, die das sofortige Schließen aller Stellglieder veranlaßt.

Vergleichbare Abläufe sind vorgesehen bei Anschluß des Produktförderschlauches 7 am Anschluß 13.

Bei dem bisher ausgeführten Verfahren zur Entleerung des Schüttgutbehälters wurde davon ausgegangen, daß der Solldruck an den jeweiligen Druckmeßeinrichtungen 17 und 18 per Handeinstellung in Abhängigkeit von den Randbedingungen des Entladeortes an der Differenzdruck-Meßeinrichtung 26 vorgegeben wird. Eine weitere Automatisierung des Entleerverfahrens wird erreicht, wenn die Einstellung des Solldruckes für die Druckmeßeinrichtungen 17 und 18 durch eine Führungsgröße erfolgt. Als Führungsgröße kann der Druck der zugeführten Druckluft in der Druckluftsammelleitung 9a gewählt werden. Die an der Druckluftsammelleitung 9a angebrachte Druckmeßeinrichtung 19 leitet den Meßwert zur Differenzdruck-Meßeinrichtung 27. Wenn ein bestimmter Differenzdruck zwischen der Druckmeßeinrichtung 17 oder 18 und der Druckmeßeinrichtung 19 an der Differenzdruck-Meßeinrichtung 27 anliegt, veranlaßt diese die Zentraleinheit 28, den Ablauf des Entleerverfahrens wie beschrieben vorzunehmen.

Die Erfassung, Weiterleitung und Verarbeitung der Signale kann pneumatisch oder elektrisch erfolgen. Die Zentraleinheit 28 kann vorzugsweise über eine speicherprogrammierbare Steuerung oder eine festprogrammierte Steuerung realisiert werden. Die Stellglieder werden vorzugsweise elektrisch oder pneumatisch betätigt. Nach Ablauf der Entleerung oder bei Auftreten von Störungen wird ein Signal durch die Zentraleinheit 28 ausgelöst, um das Bedienungspersonal an den Schüttgutbehälter 1 zu beordern.

## Patentansprüche

1. Verfahren zur Entleerung eines Schüttgutbehälters (1), bei dem über ein Druckluftleitungssystem (9) in den Schüttgutbehälter (1) eingebrachte Druckluft das Ladegut fluidisiert, wobei der Schüttgutbehälter (1) mindestens eine Kammer (2, 3) mit mindestens einer Entleeröffnung (4) aufweist, die über je ein Absperrorgan (5) mit einer Produktförderleitung (6) verbunden ist, welche über mindestens einen Anschluß (13, 14) das Schüttgut abfördert, wobei die Betätigung der für die Entleerung des Schüttgutbehälters (1) erforderlichen Absperrorgane (5) von einer Zentraleinheit (28) veranlaßt wird, die ihrerseits über eine jeder Kammer (2, 3) zugeordnete Druckmeßeinrichtung (17, 18) und eine erste Differenzdruckmeßeinrichtung (26) angesteuert wird und der Druck in der jeweiligen Kammer (2, 3) als Führungsgröße für das Verfahren dient, **dadurch gekennzeichnet**, daß für Kammern (2, 3) mit mindestens zwei Entleeröffnungen (4a und 4b bzw. 4c und 4d) die Zentraleinheit (28) die Absperrorgane (5) jeder Kammer (2, 3) zeitlich nacheinander und im Wechsel ansteuert, wobei auf ein Öffnen und Schließen des ersten Asperrorgans (5a) der ersten Kammer (2) bzw. des ersten Absperrorgans (5c) der zweiten Kammer (3) ein Öffnen und Schließen des zweiten Absperrorgans (5b) der ersten Kammer (2) bzw. zweiten Absperrorgans (5d) der zweiten Kammer (3) erfolgt und daß die erste Differenzdruck-Meßeinrichtung (26) die ordnungsgemäße Installation einer Anschlußleitung (7) an dem Anschluß (13 oder 14) durch Differenzdruckmessung zwischen der Druckmeßeinrichtung (17, 18) der jeweiligen Kammer (2, 3), d. h. zwischen der Druckmeßeinrichtung (17) für die erste Kammer (2) oder der Druckmeßeinrichtung (18) für die zweite Kammer (3) und der Druckmeßeinrichtung (20, 27) am jeweiligen Anschluß (13, 14) und bei Überschreiten eines bestimmten Differenzdruckes P_{Grenz} der Zentraleinheit (28) Signale zum Schließen der Absperrorgane (5) zuleitet.

2. Verfahren nach Anspruch 1, **dadurch gekennzeichnet**, daß die Entleerung der jeweiligen Kammer (2 oder 3) bei Vorliegen eines Differenzdruckes P_{D} von bestimmter Größe in einer zweiten Differenzdruck-Meßeinrichtung (27) beginnt oder beendet wird, wobei der zu erzielende und für eine ordnungsgemäße Entleerung erforderliche Solldruck an der jeweiligen Druckmeßeinrichtung (17, 18) in Abhängigkeit von den Druckluftrandbedingungen der Druckluftquelle (10) durch eine zweite Differenzdruck-Meßeinrichtung (27) ermittelt wird.

3. Verfahren nach Anspruch 1 oder 2, **dadurch gekennzeichnet**, daß die Differenzdruck-Meßeinrichtung (26) die Druckwerte in der jeweils zu entleerenden Kammer (2 oder 3) und der Druckmeßeinrichtung (20 oder 21) des mit der Anschlußleitung (7) verbundenen Anschlusses (13 oder 14) kontinuierlich oder in kurzen Zeitintervallen abgreift.

4. Druckluftentleereinrichtung für Schüttgutbehälter (1) mit mindestens einer Kammer (2, 3) und mindestens einer Entleeröffnung (4) je Kammer (2, 3) die über je ein Absperrorgan (5) mit einer Produktförderleitung (6) verbunden ist, welche über einen Anschluß (13 oder 14) und eine daran angeschlossene Anschlußleitung (7) das Schüttgut abfördert, wobei die Betätigung der für die Entleerung des Schüttgutbehälters (1) erforderlichen Absperrorgane (5) von einer Zentraleinheit (28) erfolgt, die durch eine jeder Kammer (2, 3) zugeordnete Druckmeßeinrichtung (17, 18) und eine erste Differenzdruckmeßeinrichtung (26) beaufschlagt wird und die nach einem vorgegebenen Bewertungsplan für die eingegangenen Steuersignale die Betätigung der Stellglieder im Druckluftleitungssystem (9) und der Absperrorgane (5) nach einem vorgebbaren Ablaufplan selbsttätig veranlaßt, **dadurch gekennzeichnet**, daß an jeder Kammer (2, 3) mindestens zwei Entleeröffnungen (4a und 4b bzw. 4c und 4d) angeordnet sind, und daß an jedem Anschluß (13, 14) eine Druckmeßeinrichtung (21, 22) angeordnet ist, wobei die erste Differenzdruckmeßeinrichtung (26) über Signalleitungen mit der jeder Kammer (2, 3) zugeordnete Druckmeßeinrichtung (17, 18), mit der jedem Anschluß (13, 14) zugeordneten Druckmeßeinrichtungen (21, 22), und mit der Zentraleinheit (28) verbunden ist.

5. Druckluftentleereinrichtung nach Anspruch 4, **dadurch gekennzeichnet**, daß eine Druckmeßeinrichtung (19) in einer Druckluftsammelleitung (9a), die Druckluft zu den Kammern (2,3) leitet, und eine zweite Differenzdruck-Meßeinrichtung (27) vorgesehen sind, wobei die zweite Differenzdruck-Meßeinrichtung (27) die Drucksignale der in der Druckluftsammelleitung (9a) angeordneten Druckmeßeinrichtung (19) und der jeder Kammer zugeordneten Druckmeßeinrichtungen (17, 18) aufnimmt und auswertet und der Zentraleinheit (28) zuführt.

6. Druckluftentleereinrichtung nach Anspruch 4 oder 5, **dadurch gekennzeichnet**, daß jedem Anschluß (13, 14) eine Injektordüse (15, 16) zugeordnet ist.

## Claims

1. A process for emptying a bulk goods container (1) in which compressed air introduced into the bulk goods container (1) via a compressed air piping system (9) fluidizes the charge, wherein the bulk goods container (1) comprises at least one chamber (2, 3) with at least one emptying opening (4) which is connected via a respective shut-off element (5) to a product conveying line (6) which discharges the bulk goods via at least one terminal (13, 14), wherein the actuation of the shut-off elements (5) required for the emptying of the bulk goods container (1) is instigated by a central unit (28) which is itself driven via a pressure measuring device (17, 18) assigned to each chamber (2, 3) and a first difference pressure measuring device (26), and the pressure in the respective chamber (2, 3) serves as reference variable for the process, characterised in that for chambers (2, 3) having at least two emptying openings (4a, 4b and 4c, 4d) the central unit (28) drives the shut-off elements (5) of each chamber (2, 3) consecutively and in alternation, where on the opening and closure of the first shut-off element (5a) of the first chamber (2) and of the first shut-off element (5c) of the second chamber (3) an opening and closure of the second shut-off element (5b) of the first chamber (2) and of the second shut-off element (5d) of the second chamber (3) respectively occurs, and that the first difference pressure measuring device (26) monitors the correct installation of a connection line (7) at the terminal (13 or 14) by difference pressure measurement between the pressure measuring device (17, 18) of the respective chamber (2, 3), i.e. between the pressure measuring device (17) for the first chamber (2) or the pressure measuring device (18) for the second chamber (3) and the pressure measuring device (20, 27) at the terminal (13, 14) and in the event of the overshooting of a specific difference pressure P_{Grenz} supplies the central unit (28) with signals for the closure of the shut-off elements (5).

2. A process as claimed in Claim 1, characterised in that the emptying of the respective chamber (2 or 3) is started or ended in the presence of a difference pressure P_{D} of a specific value in a second difference pressure measuring device (27), where the theoretical pressure across the respective pressure measuring device (17, 18) which is to be obtained and which is necessary for correct emptying is determined as a function of the compressed air limiting conditions of the compressed air source (10) by a second difference pressure measuring device (27).

3. A process as claimed in Claim 1 or 2, characterised in that the difference pressure measuring device (26) taps the pressure values in the respective chamber (2 or 3) to be emptied and the pressure measuring device (20 or 21) of the terminal (13 or 14) connected to the connection line continuously or at short intervals of time.

4. A compressed air emptying device for bulk goods containers (1) with at least one chamber (2, 3) and at least one emptying opening (4) in respect of each chamber (2, 3), which is connected via a respective shut-off element (5) to a product conveying line (6) which discharges the bulk goods via a terminal (13 or 14) and a connection line connected thereto, where the actuation of the shut-off elements (5) required for the emptying of the bulk goods container (1) is effected by a central unit (28) which is acted upon by a pressure measuring device (17, 18), assigned to each chamber (2, 3), and by a first difference pressure measuring device (26) and which, in accordance with a predetermined evaluation plan for the incoming control signals, automatically instigates the actuation of the control elements in the compressed air piping system (9) and the shut-off elements (5) in accordance with a predeterminable flow plan, characterised in that each chamber (2, 3) is provided with at least two emptying openings (4a, 4b and 4c, 4d) and that a pressure measuring device (21, 22) is arranged at each terminal (13, 14), where the first difference pressure measuring device (26) is connected via signal lines to the pressure measuring device (17, 18) assigned to each chamber (2, 3), to the bridge measuring devices (21, 22) assigned to each terminal (13, 14) and to the central unit (28).

5. A compressed air emptying device as claimed in Claim 4, characterised in that a pressure measuring device (19) in a compressed air collecting line (9a) which conveys compressed air to the chambers (2, 3), and a second difference pressure measuring device (27) are provided, where the second difference pressure measuring device (27) receives and analyses the pressure signals of the pressure measuring device (19) arranged in the compressed air collecting line (9a) and of the pressure measuring devices (17, 18) assigned to each chamber and supplies these to the central unit (28).

6. A compressed air emptying device as claimed in Claim 4 or 5, characterised in that an injector nozzle (15, 16) is assigned to each terminal (13, 14).

## Revendications

1. Procédé pour le déchargement d'un conteneur pour pulvérulents (1), selon lequel de l'air comprimé introduit dans le conteneur (1) par l'intermédiaire d'un système de conduites d'air comprimé (9) fluidifie le produit chargé, étant précisé que le conteneur pour pulvérulents (1) comporte au moins une chambre (2, 3) pourvue d'au moins une ouverture de déchargement (4) qui est reliée, par l'intermédiaire d'un organe de blocage (5), à une conduite d'alimentation de produit (6) évacuant les pulvérulents par l'intermédiaire d'au moins un raccordement (13, 14), étant précisé aussi que l'actionnement des organes de blocage (5) nécessaires pour le déchargement du conteneur pour pulvérulents (1) est déclenché par une unité centrale (28) qui est commandée de son côté par l'intermédiaire d'un dispositif de mesure de pression (17, 18) associé à chaque chambre (2, 3) et d'un premier dispositif de mesure de pression différentielle (26), et que la pression régnant dans la chambre (2, 3) correspondante sert de grandeur de référence pour le procédé, caractérisé en ce que, pour des chambres (2, 3) pourvues d'au moins deux ouvertures de déchargement (4a et 4b, 4c et 4d), l'unité centrale (28) commande successivement et alternativement dans le temps les organes de blocage (5) de chaque chambre (2, 3), étant précisé qu'une ouverture et une fermeture du premier organe de blocage (5a) de la première chambre (2) ou du premier organe de blocage (5c) de la seconde chambre (3) est suivie par une ouverture et une fermeture du second organe de blocage (5b) de la première chambre (2) ou du second organe de blocage (5d) de la seconde chambre (3), et en ce que le premier dispositif de mesure de pression différentielle (26) surveille l'installation correcte d'une conduite de raccordement au niveau du raccordement (13 ou 14), grâce à la mesure de pression différentielle entre les dispositifs de mesure de pression respectifs (17, 18) des chambres (2, 3), c'est-à-dire entre le dispositif de mesure de pression (17) prévu pour la première chambre (2) ou le dispositif de mesure de pression (18) prévu pour la seconde chambre (3), et les dispositifs de mesure de pression (20, 21) prévus au niveau des raccordements (13, 14), et au cas où une pression différentielle définie P_{Grenz} est dépassée, transmet à l'unité centrale (28) des signaux en vue de la fermeture des organes de blocage (5).

2. Procédé selon la revendication 1, caractérisé en ce que le déchargement de la chambre (2 ou 3) correspondante commence ou se termine en présence d'une pression différentielle P_{D} d'une grandeur définie, dans un second dispositif de mesure de pression différentielle (27), étant précisé que la pression théorique à atteindre et nécessaire pour un déchargement correct, au niveau du dispositif de mesure de pression (17, 18) correspondant, est calculée par un second dispositif de mesure de pression différentielle (27) en fonction des conditions marginales d'air comprimé de la source d'air comprimé (10).

3. Procédé selon la revendication 1 ou 2, caractérisé en ce que le dispositif de mesure de pression différentielle (26) prélève de façon continue ou suivant des intervalles de temps courts les valeurs de pression dans la chambre à décharger (2 ou 3) et dans le dispositif de mesure de pression (20 ou 21) du raccordement (13 ou 14) relié à la conduite de raccordement (7).

4. Dispositif de déchargement à air comprimé pour des conteneurs pour pulvérulents (1) comportant au moins une chambre (2, 3) et au moins une ouverture de déchargement (4) pour chaque chambre (2, 3), qui est reliée, par l'intermédiaire d'un organe de blocage (5), à une conduite d'alimentation de produit (6) évacuant les pulvérulents par l'intermédiaire d'un raccordement (13 ou 14) et d'une conduite de raccordement (7) raccordée à celui-ci, étant précisé que l'actionnement des organes de blocage (5) nécessaires pour le déchargement du conteneur pour pulvérulents (1) se fait grâce à une unité centrale (28) qui est sollicitée par un dispositif de mesure de pression (17, 18) associé à chaque chambre (2, 3) et par un premier dispositif de mesure de pression différentielle (26), et qui entraîne automatiquement, selon un plan d'évaluation prédéfini pour les signaux de commande entrés, l'actionnement des organes de réglage dans le système de conduites d'air comprimé (9) et des organes de blocage (5) selon un organigramme apte à être prédéfini, caractérisé en ce qu'au moins deux ouvertures de déchargement (4a et 4b, 4c et 4d) sont disposées au niveau de chaque chambre (2, 3), et en ce qu'il est prévu, au niveau de chaque raccordement (13, 14), un dispositif de mesure de pression (21, 22), étant précisé que le premier dispositif de mesure de pression différentielle (26) est relié par des conduites de signaux au dispositif de mesure de pression (17, 18) associé à chaque chambre (2, 3), au dispositif de mesure de pression (21, 22) associé à chaque raccordement (13, 14) et à l'unité centrale (28).

5. Dispositif de déchargement à air comprimé selon la revendication 4, caractérisé en ce qu'il est prévu un dispositif de mesure de pression (19) dans une conduite collectrice d'air comprimé (9a) qui amène de l'air comprimé vers les chambres (2, 3), et un second dispositif de mesure de pression différentielle (27), ce dernier recevant et évaluant les signaux de pression du dispositif de mesure de pression (17) disposé dans la conduite collectrice d'air comprimé (9a) et des dispositifs de mesure de pression (17, 18) associés à chaque chambre, et les transmettant à l'unité centrale (28).

6. Dispositif de déchargement à air comprimé selon la revendication 4 ou 5, caractérisé en ce qu'une buse d'injecteur (15, 16) est associée à chaque raccordement (13, 14).
